# EUROPÄISCHE PATENTSCHRIFT

(11) **EP 0 897 047 B1**
(45) Veröffentlichungstag und Bekanntmachung des Hinweises auf die Patenterteilung: **21.03.2007**
(21) Anmeldenummer: 98114395.1
(22) Anmeldetag: 31.07.1998
(51) Int. Cl.: E06B 3/96, F16B 7/04, F16B 21/02

(54) **Verbindungselement für ein Hohlteil mit einem weiteren Teil im Tür- und Fensterbau**
Element for connecting a hollow element with another element in door and window construction
Elément de raccordement d'un corps creux avec un autre élément pour la construction de portes et de fenêtres

(30) Priorität: 12.08.1997 DE 19734875
(43) Veröffentlichungstag der Anmeldung: 17.02.1999
(73) Patentinhaber: Gluske, Joachim, 4281 Wuppertal (DE)
(72) Erfinder:
(74) Vertreter: Füssel, Michael

(56) Entgegenhaltungen:
- EP-A- 0 288 756
- AU-B- 563 550
- FR-A- 1 497 682
- FR-A- 2 122 006
- FR-A- 2 618 862
- GB-A- 993 761
- GB-A- 2 169 982
- GB-A- 2 272 013

## Beschreibung

Die Erfindung betrifft ein Verbindungselement für ein Hohlteil mit einem weiteren Teil im Tür- und Fensterbau gemäß dem Oberbegriff des Patentanspruchs 1.

Ein gattungsgemäßes Verbindungselement ist aus der FR-A-1 497 682 bekannt.

Der Erfindung liegt die Aufgabe zugrunde, ein gattungsgemäßes Verbindungselement so weiterzuentwickeln, daß eine einfache, schnelle und sichere Verbindung zwischen dem Halteelement und dem Hohlteil erzielt wird.

Diese Aufgabe wird dadurch gelöst, daß das Spreizelement eine in Richtung der Achse des Halteelementes verlaufende Innenvielkantfläche aufweist und die feste Verbindung durch Drehen des Spreizelementes um die Achse des Hohlteils entstehen kann.

Die Vielkantfläche erlaubt das Einsetzen eines Vielkantschlüssels, um das Spreizelement zu verdrehen und das Drehen des Speizelementes um die Achse des Hohlteils erlaubt einen einfachen Zugriff auf das Spreizelement am offenen Ende des Hohlteils. Das Verbindungselement hat somit den Vorteil, daß mittels eines Vielkantschlüssels das Spreizelement am offenen Ende des Hohlteils ergriffen werden kann, um das Spreizelement zu verdrehen.

Vorteilhaft ist es, wenn das Spreizelement mindestens eine bogenförmige Fläche aufweist, die mit einer entsprechenden bogenförmigen Fläche am Halteelement zusammenwirkt. Konkave Flächen am Halteelement und konvexe Flächen am Spreizelement vergrößern den Raum, in dem das Spreizelement bewegt wird, und vergrößern die Wirkflächen zwischen Spreizelement und Halteelement.

Eine bevorzugte Ausführungsform sieht vor, daß am Spreizelement und/oder am Halteelement Rastmittel vorgesehen sind. Diese Rastmittel können ineinandergreifende Zähne sein. Die Rastmittel können jedoch auch von miteinander zusammenwirkenden konkaven und konvexen Flächen gebildet werden. Wenn eine unlösbare Verbindung gewünscht wird, wird als Rastmittel eine Rampe und eine Hinterschneidung vorgeschlagen, die mit einem vorstehenden Element am gegenüberliegenden Teil zusammenwirken und somit ein leichtes Festdrehen ermöglichen, aber ein Zurückdrehen des Spreizelementes verhindern.

Um das Gewicht des Spreizelements zu reduzieren, wird vorgeschlagen, daß das Spreizelement eine Durchbohrung in Richtung der Achse des Halteelements aufweist. Eine derartige Durchbohrung hat den weiteren Vorteil, daß in der Durchbohrung eine Stange geführt werden kann, die beispielsweise zur Verriegelung einer Tür verwendet wird. Insbesondere bei Stülptüren kann der Türtreibriegel, der senkrecht im Türflügel verläuft und den Türflügel mit dem Türrahmen und der Bodenschwelle verbindet, durch das Spreizelement hindurchlaufen. Vorzugsweise wird der Türtreibriegel im Spreizelement geführt.

Vorteilhaft ist es, wenn die äußere Form des Halteelements der inneren Form des Hohlteil angepaßt ist. Dies erlaubt es, den Raum innerhalb des Hohlteils möglichst vollständig zu nutzen. Außerdem wird das Halteelement dadurch im Hohlteil geführt und es entstehen große Flächen zum Zusammenwirken zwischen Halteelement und Hohlteil.

Insbesondere bei einem Zusammenwirken von Hohlteilen aus Metall und Halteelementen aus Kunststoff ist es vorteilhaft, wenn die äußere Form des Halteelements relativ kleine Erhebungen aufweist, die die Verbindungsfläche zwischen Halteelement und Hohlteil bilden. Die Höhe der Erhebungen kann auf die maximale Fertigungstoleranz zwischen Halteelement und Hohlteil abgestimmt sein, so daß beim Einführen des Halteelements in das Hohlteil immer eine Verbindungsfläche zwischen Halteelement und Hohlteil entsteht. Sofern das Halteelement zu groß oder das Hohlteil zu klein gefertigt ist, wird das Halteelement an den Stellen der Erhebungen verbogen, die Erhebungen werden zusammengedrückt oder ein Teil der Erhebungen wird beim Einführen des Halteelements abgeschliffen. Dies gewährleistet auch bei Fertigungstoleranzen eine gute Führung des Halteelements im Hohlteil.

Eine bevorzugte Anwendung sieht vor, daß das Spreizelement und das Halteelement Teile eines Eckverbinders sind. Gerade im Bereich von Eckverbindern bei Tür- und Fensterflügeln sind derartige Verbindungselemente gesucht, da sie von außen unsichtbar anbringbar sind und eine schnelle, einfache, leicht automatisierbare Verbindung der Hohlteile erlaubt. Außerdem ist das Verbindungselement auch gut dazu geeignet, mehrere ineinandergesteckte Hohlteile miteinander zu verbinden. Dies ist beispielsweise bei in Stranggußprofilen eingesetzten Metallprofilen notwendig.

Beim Einsatz des Verbindungselementes als Teil eines Eckverbinders ist es vorteilhaft, wenn das Halteelement eine Bohrung oder eine Vertiefung auf der Achse des entsprechenden Halteelements des Eckverbinders aufweist. Sofern in einem Halteelement des Eckverbinders eine Stange, wie beispielsweise ein Türtreibriegel geführt wird, dient die Bohrung im entsprechenden Halteelement des Eckverbinders dazu, die Stange oder den Türtreibriegel durch das entsprechende Halteelement des Eckverbinders hindurchzuführen. Anstelle einer Bohrung kann auch nur eine Vertiefung vorgesehen sein, die die Position der anzubringenden Bohrung angibt und das Anbringen einer Bohrung erleichtert, sofern eine Bohrung benötigt wird.

Ein Ausführungsbeispiel der Erfindung ist in der Zeichnung dargestellt und wird im folgenden näher beschrieben. Es zeigt,
- Figur 1: eine perspektivische Ansicht eines Speizelementes,
- Figur 2: eine perspektivische Ansicht eines Halteelelementes,
- Figur 3: eine perspektivische Darstellung eines Halteelementes mit eingesetztem Spreizelement und zwei weggebrochenen Seiten des Halteelements
- Fugur 4: einen Längsschnitt durch ein Verbindungselement nach Figur 3
- Figur 5: einen Querschnitt durch ein Verbindungslement nach Figur 3 mit lockerem Spreizelement und
- Figur 6: einen Querschnitt durch ein Verbindungslement nach Figur 3 mit angezogenem Spreizelement.

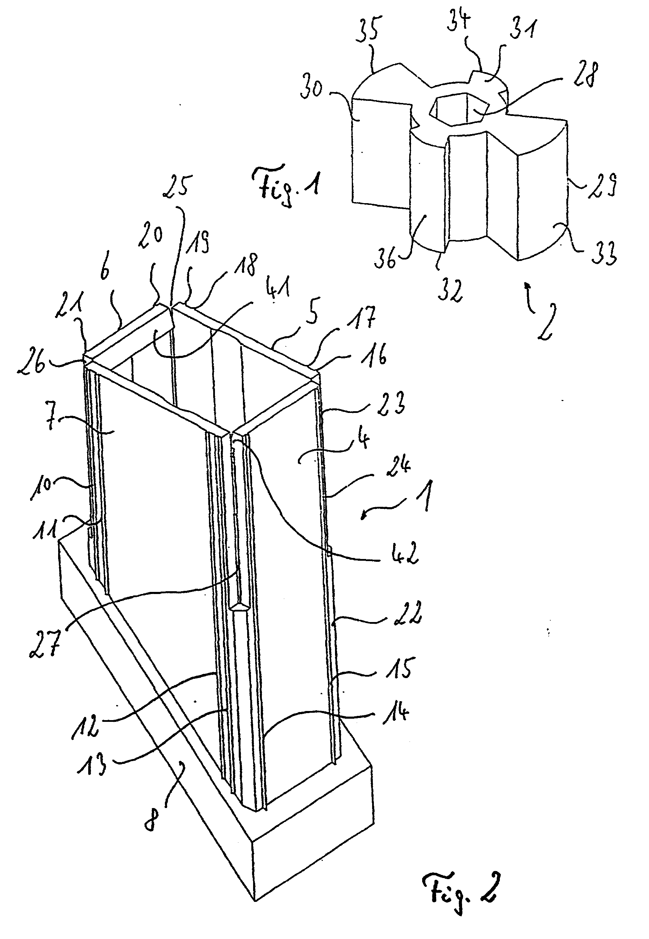

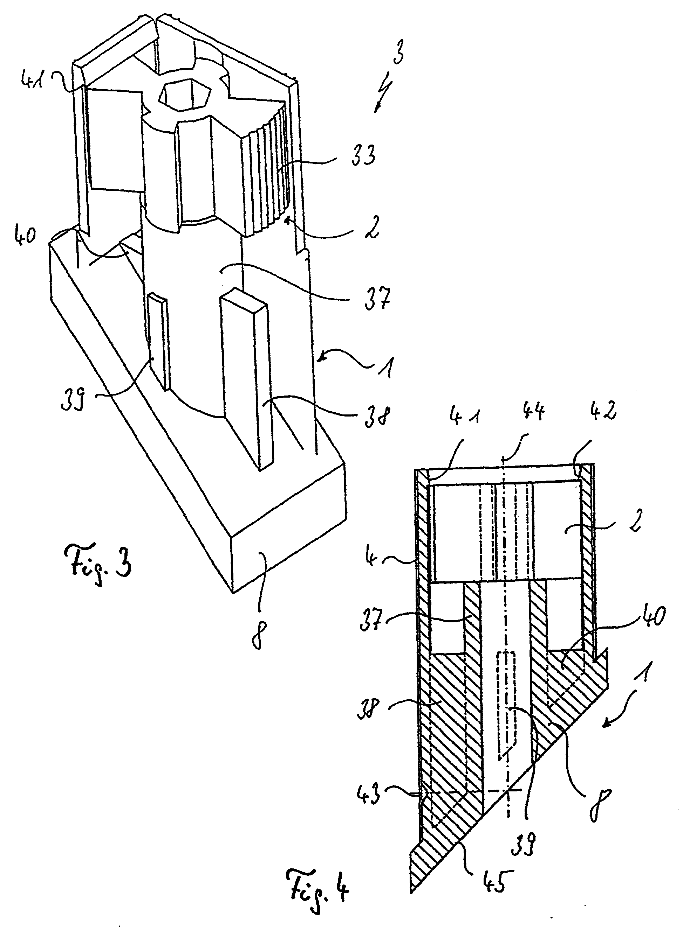

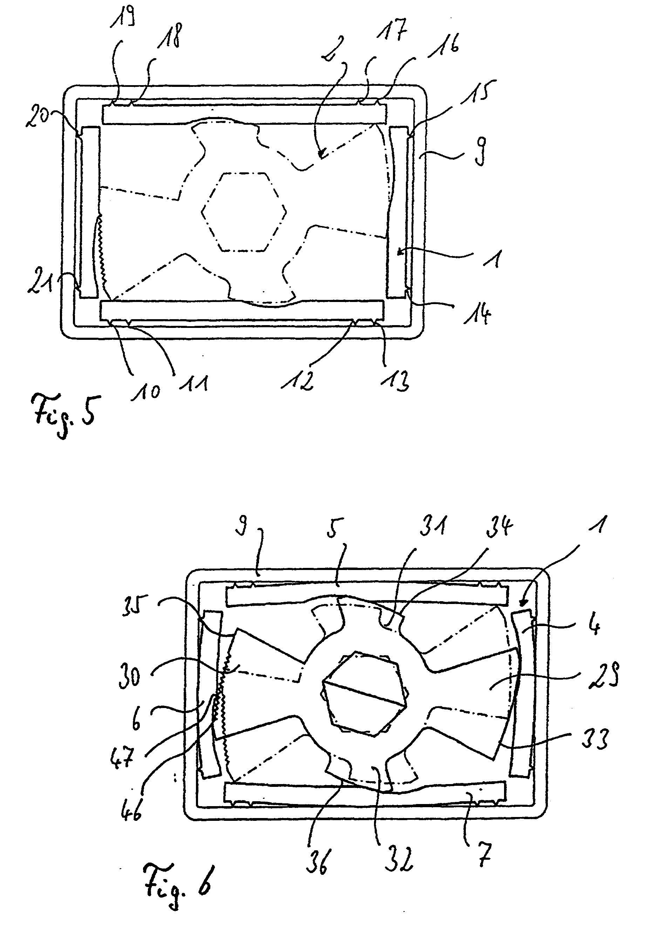

Die Figuren 1 und 2 zeigen ein Halteelement 1 und ein Spreizelement 2, die wie in Figur 3 gezeigt, zu einem Verbindungselement 3 zusammengesteckt werden können.

Das in Figur 2 gezeigte Halteelement besteht aus einer in einem Winkel von 45° zu den Seitenwänden 4, 5, 6, 7 angeordneten Grundfläche 8. Diese Grundfläche 8 dient dazu, wie bei den bekannten Eckverbindern mit einem weiteren Halteelement ein rechtwinkliges Winkelstück zu erzeugen. Die Seitenflächen sind im vorliegenden Fall so zueinander angeordnet, daß sie ein Rechteck bilden, das in das in Figur 5 gezeigte Hohlteil 9 paßt. An den mit dem Hohlteil 9 zusammenwirkenden Außenflächen der Seiten 4, 5, 6, 7 des Halteelementes 1 sind in Richtung der Achse des Hohlteils 9, das im vorliegenden Fall ein Profilrohr ist, als Erhebungen Nocken 10 bis 21 vorgesehen, die beim Einstecken des Halteelementes 1 in das Profilrohr 9 am Profilrohr 9 anliegen. Sofern das Profilrohr 9 nicht maßhaltig gearbeitet ist, werden beim Einstecken des Haltelementes 1 in das Profilrohr 9 Teile der Nocken 10 bis 21 verformt oder abgeschliffen.

Das Halteelement 1 hat einen unteren Bereich 22, in dem Seitenwände 4, 5, 6, 7 an ihren Ecken miteinander verbunden sind, und einen oberen Bereich 23, in dem zwischen den Rändern der Seitenwände 4 bis 7 jeweils ein Spalt 24, 25, 26, 27 vorgesehen ist. Die Spalten 24 bis 27 sind alle gleich lang.

In dieses Halteelement 1 ist ein Spreizelement 2 einsetzbar, das in Figur 1 genauer gezeigt ist. Das Spreizelement 2 ist ein rotationssymmetrischer Körper mit einer zentralen secheckigen Bohrung 28 und symmetrisch dazu angeordnet zwei größeren Flügelteilen 29, 30 und zwei kleineren Flügelteilen 31, 32. Diese Flügelteile haben radial außen liegende konvexe Flächen 33, 34, 35, 36, die radial soweit außen angeordnet sind, daß das Spreizelement 2 noch in das Haltelement 1 einsteckbar ist.

Die Figur 3 zeigt ein in das Halteelement 1 eingestecktes Spreizelement 2 und bei diesem Spreizelement 2 ist an einer radial außen liegenden Fläche 33 des Spreizelements 2 eine Zackenstruktur eingezeichnet, die -wie weiter unten beschrieben-, als Rastelement wirkt. Eine derartige Zackenstruktur kann auch an den übrigen Flächen 34, 35, 36 des Spreizelements 2 vorgesehen werden.

Der Einblick in das in Figur 2 gezeigte Halteelement 1 zeigt, daß auf der Grundfläche 8 des Halteelementes 1 ein zylindrischer Körper 37 vorgesehen ist, der durch Stützwände 38, 39, 40 stabilisiert wird und das in das Halteelement 1 eingesetzte Spreizelement 2 trägt. Ein Herausfallen des Spreizelementes 2 aus dem Halteelement 1 wird durch vorstehende Nasen 41, 42 verhindert, die am oberen Ende von zwei gegenüberliegenden Seitenwänden 4, 6 angeordnet sind.

Im unteren Bereich 22 des Halteelementes 1 ist eine Vertiefung 43 eingearbeitet, die als Bohreransatz für eine an dieser Stelle anbringbare Bohrung dient. Die Position der Vertiefung 43 ist so gewählt, daß eine an dieser Stelle rechtwinklig zur Seitenwand 4 angebrachte Bohrung die Achse 44 des Halteelements 1 im Bereich der Unterseite 45 der Grundfläche 8 schneidet. Wenn die Grundfläche eines weiteren Halteelements an die Grundfläche 45 des ersten Halteelements angelegt wird, sodaß zwischen den Halteelemeneten ein rechter Winkel entsteht, kann an der Vertiefung 43 eine Bohrung angebracht werden, die mit der Achse des weiteren Halteelementes fluchtet. Dies ermöglicht es, im Halteelement eine Stange wie beispielsweise eine Treibstange zu führen, die im Bereich der Vertiefung 43 aus dem Halteelement 1 austritt.

Im vorliegenden Fall hat das Halteelement 1 eine Grundfläche 8, die im Winkel von 45 Grad zur Achse 44 des Halteelementes 1 angeordnet ist. Das Halteelement 1 kann jedoch auch mit einer rechtwinklig zu einer Seitenfläche 4 angeordneten Grundfläche ausgebildet werden, oder es können zwei Halteelemente mit schrägen Grundflächen derart spiegelbildlich zueinander angeordnet werden, daß auf einer Achse 44 liegende Hohlteile miteinander verbunden werden können.

Die Funktion des Spreizelementes 2 zeigen die Figuren 5 und 6. Wie in Figur 5 gezeigt, kann das Spreizelement 2 leicht in das Halteelement 1 eingesteckt werden. In dieser Einsteckposition liegen die größeren Flügel 29, 30 etwa diagonal im Halteelement 1.

Das Verbindungsstück aus Spreizelement 2 und Halteelement 1 wird nun in das Hohlprofil 9 hineingesteckt und hierbei bilden die Erhebungen 10 bis 21 die Anlagefläche zwischen dem Halteelement 1 und dem Hohlprofil 9.

Anschließend wird mit einem Sechskantschlüssel, der in die Sechskantbohrung 28 eingesetzt wird, das Spreizelement um etwa 20 Grad im Uhrzeigersinn um die Achse der Bohrung 28 gedreht. Die konkaven Seiten 33, 35 und 34, 36 der Flügel 29, 30 und 31, 32 drücken dabei gegen die Innenseite der Seitenwände 4, 5, 6, 7, wodurch die Seitenwände nach Außen gegen die Innenseite des Hohlprofils 9 gedrückt werden.

Das Spreizelement 2 wird solange um die Achse der Bohrung 28 gedreht bis eine ausreichend feste Anlage des Halteelementes 1 am Hohlprofil 9 erzeugt ist.

Ein Zurückgleiten des Spreizelementes entgegen der durchgeführten Drehung wird durch Rastelemente 46 an der Seite 33 mindestens eines Flügels des Spreizelementes 2 verhindert, die mit einem vorstehenden Element 47 an der Innenseite einer Seitenwand 6 zusammenwirken. Im vorliegenden Fall ist als Rasteinrichtung 46, 47 eine sperrende Verzahnung vorgesehen.

Um eine leichte Drehung des Spreizelementes 3 im Halteelement 1 zu ermöglichen, sind an der Innenseite der Wände 4, 5, 6, 7 des Halteelementes konkave Ausnehmungen vorgesehen, die als Gegenstück mit den Flächen 33, 34, 35, 36 des Spreizelementes 3 zusammenwirken.

## Patentansprüche

1. Verbindungselement (3) für ein Hohlteil (9) mit einem weiteren Teil im Tür- und Fensterbau mit einem Halteelement (1), das in das Hohlteil (9) in Richtung der Achse des Halteelementes (44) einsteckbar ist und einem Spreizelememt (2), das das Halteelement (1) gegen das Hohlteil (9) drückt, wobei die innere Form des Halteelementes (1) und die äußere Form des Spreizelementes (2) so aufeinander abgestimmt sind, daß durch Drehen des Spreizelementes (2) relativ zum Halteelement (1) eine feste Verbindung zwischen Halteelement (1) und Hohlteil (9) entstehen kann, ***dadurch gekennzeichnet, daß*** das Spreizelement (2) eine in Richtung der Achse (44) des Halteelements (1) verlaufende Innenvielkantfläche aufweist und die feste Verbindung durch Drehen des Spreizelementes (2) um die Achse (44) des Hohlteils (9) entstehen kann.

2. Verbindungselement nach Anspruch 1, ***dadurch gekennzeichnet, daß*** das Spreizelement (2) mindestens eine bogenförmige Fläche (33, 34, 35, 36) aufweist, die mit einer entsprechenden bogenförmigen Fläche am Halteelement (1) zusammenwirkt.

3. Verbindungselement nach einem der vorhergehenden Ansprüche, ***dadurch gekennzeichnet, daß*** am Spreizelement (2) und/oder am Halteelement (1) Rastmittel (46, 47) vorgesehen sind.

4. Verbindungselement nach einem der vorhergehenden Ansprüche, ***dadurch gekennzeichnet, daß*** das Spreizelement (2) eine Durchbohrung (28) in Richtung der Achse (44) des Halteelementes (1) aufweist.

5. Verbindungselement nach einem der vorhergehenden Ansprüche, ***dadurch gekennzeichnet, daß*** die äußere Form des Halteelementes (1) der inneren Form des Hohlteils (9) angepaßt ist.

6. Verbindungselement nach einem der vorhergehenden Ansprüche, ***dadurch gekennzeichnet, daß*** die äußere Form des Halteelementes (1) kleine Erhebungen (10-21) aufweist, die die Verbindungsfläche zwischen Halteelement (1) und Hohlteil (9) bilden.

7. Verbindungselement nach einem der vorhergehenden Ansprüche, ***dadurch gekennzeichnet, daß*** das Spreizelement (2) und das Halteelement (1) Teile eines Eckverbinders sind.

8. Verbindungselement nach Anspruch 7, ***dadurch gekennzeichnet, daß*** das Halteelement (1) eine Bohrung oder eine Vertiefung (43) auf der Achse des entsprechenden Halteelementes des Eckverbinders aufweist.

## Claims

1. Connecting element (3) for connecting a hollow part (9) with a further part in window and door construction with a holding element (1) which can be inserted in the hollow part (9) in the direction of the axis of the holding element (44), and with a bracing element (2) which presses the holding element (1) against the hollow part (9), wherein the internal shape of the holding element (1) and the external shape of the bracing element (2) are matched to each other in such a way that by rotating the bracing element (2) relative to the holding element (1) a firm connection can be produced between the holding element (1) and hollow part (9), **characterised in that** the bracing element (2) has an internal polyhedral surface extending in the direction of the axis (44) of the holding element (1) and the firm connection can be produced by rotating the bracing element (2) about the axis (44) of the hollow part (9).

2. Connecting element as claimed in claim 1, **characterised in that** the bracing element (2) has at least one arcuate surface (33, 34, 35, 36) which cooperates with a corresponding arcuate surface on the holding element (1).

3. Connecting element as claimed in any one of the preceding claims, **characterised in that** latching means (46, 47) are provided on the bracing element (2) and/or on the holding element (1).

4. Connecting element as claimed in any one of the preceding claims, **characterised in that** the bracing element (2) has a through bore (28) in the direction of the axis (44) of the holding element (1)**.**

5. Connecting element as claimed in any one of the preceding claims, **characterised in that** the external shape of the holding element (1) is adapted to the internal shape of the hollow part (9).

6. Connecting element as claimed in any one of the preceding claims, **characterised in that** the external shape of the holding element (1) has small raised areas (10-21) which form the connecting surface between the holding element (1) and hollow part (9).

7. Connecting element as claimed in any one of the preceding claims, **characterised in that** the bracing element (2) and the holding element (1) are parts of a corner connector.

8. Connecting element as claimed in claim 7, **characterised in that** the holding element (1) has a bore or a recess (43) on the axis of the corresponding holding element of the corner connector.

## Revendications

1. Elément de liaison (3) pour une pièce creuse (9) avec une autre pièce, dans la construction de portes et de fenêtres, comprenant un élément de fixation (1) qui est apte à être emboîté dans la pièce creuse (9) dans le sens de l'axe de l'élément de fixation (44), et un élément d'écartement (2) qui presse l'élément de fixation (1) contre la pièce creuse (9), la forme intérieure de l'élément de fixation (1) et la forme extérieure de l'élément d'écartement (2) étant adaptées l'une à l'autre de sorte que la rotation de l'élément d'écartement (2) par rapport à l'élément de fixation (1) puisse donner une liaison solide entre l'élément de fixation (1) et la pièce creuse (9), ***caractérisé* en ce que** l'élément d'écartement (2) présente une surface polygonale intérieure qui s'étend dans le sens de l'axe (44) de l'élément de fixation (1), et la liaison solide peut être formée grâce à la rotation de l'élément d'écartement (2) autour de l'axe (44) de la pièce creuse (9).

2. Elément de liaison selon la revendication 1, ***caractérisé* en ce que** l'élément d'écartement (2) présente au moins une surface courbe (33, 34, 35, 36) qui coopère avec une surface courbe correspondante prévue sur l'élément de fixation (1).

3. Elément de liaison selon l'une des revendications précédentes, ***caractérisé* en ce qu'**il est prévu sur l'élément d'écartement (2) et/ou sur l'élément de fixation (1) des moyens d'enclenchement (46, 47).

4. Elément de liaison selon l'une des revendications précédentes, ***caractérisé* en ce que** l'élément d'écartement (2) présente un perçage traversant (28) dans le sens de l'axe (44) de l'élément de fixation (1).

5. Elément de liaison selon l'une des revendications précédentes, ***caractérisé* en ce que** la forme extérieure de l'élément de fixation (1) est adaptée à la forme intérieure de la pièce creuse (9).

6. Elément de liaison selon l'une des revendications précédentes, ***caractérisé* en ce que** la forme extérieure de l'élément de fixation (1) présente des petites parties saillantes (10-21) qui forment la surface de liaison entre l'élément de fixation (1) et la pièce creuse (9).

7. Elément de liaison selon l'une des revendications précédentes, ***caractérisé* en ce que** l'élément d'écartement (2) et l'élément de fixation (1) font partie d'un élément de liaison d'angle.

8. Elément de liaison selon la revendication 7, ***caractérisé* en ce que** l'élément de liaison (1) présente un perçage ou un creux (43) sur l'axe de l'élément de fixation correspondant de l'élément de liaison d'angle.
